# EUROPEAN PATENT APPLICATION

(11) **EP 4 523 979 A2**
(43) Date of publication of application: **19.03.2025**
(21) Application number: 25155633.8
(22) Date of filing: 11.08.2021
(51) Int. Cl.: B60S 1/48

(54) **MODULAR CLEANING SYSTEM FOR CLEANING A SENSOR WINDOW OF AN OPTICAL SENSING DEVICE OF A MOTOR VEHICLE**

(30) Priority: 25.08.2020 NL 2026335; 25.08.2020 NL 2026339; 25.08.2020 NL 2026337; 25.08.2020 NL 2026336
(62) Divisional of application: 21756078.8
(71) Applicant: MCi (Mirror Controls International) Netherlands B.V., 3447 GK Woerden (NL)
(72) Inventor: WIJNTJES, Jannick Daniël, 3447 GK Woerden (NL)
(74) Representative: V.O.

(57) **Abstract**

The invention relates to a cleaning system for cleaning a sensor window of an optical sensing device of a motor vehicle. More particular, the invention relates to a cleaning system for cleaning a sensor window of an optical distance measuring device, such as a LiDAR sensing device, of a motor vehicle. the system comprising a housing module for holding the sensing device, comprising a window opening, that defines a sensor window plane, for receiving therein the sensor window of the optical sensing device; a wiper module including a wiper for wiping the sensor window; a drive module, having a rotary output organ,; and a kinematic transformer module interconnected between the drive module and the wiper module and configured for transforming a rotation of the rotary output organ of the drive module into a cyclic wiper trajectory of the wiper.

## Description

### BACKGROUND

The invention relates to a cleaning system for cleaning a sensor window of an optical sensing device of a motor vehicle. More particular, the invention relates to a cleaning system for cleaning a sensor window of an optical distance measuring device, such as a LiDAR sensing device, of a motor vehicle.

Vehicles, and in particular cars, are often equipped with various sensing devices for sensing the vehicle's environment. Typical sensing devices for this purpose are arranged to estimating distances between the vehicle and objects in the vehicle's environment, and/or relative velocities of said objects with respect to the vehicle. A particular example of an optical sensor technology that is often employed include RADAR and Lidar/LIDAR/LiDAR (LIght Detection And Ranging or Laser Imaging Detection And Ranging), also called LADAR (LAser Detection And Ranging) or 3D laser scanning.

Optical sensing devices, such as optical distance measuring devices, particularly LiDAR sensing devices, may include one or more (laser) light sources for transmitting one or more (laser) light beams into the environment. One or more optical detectors are provided for detecting reflections of the transmitted one or more laser beams, wherein a processing unit may generate a mapping of the environment based on the transmitted and detected reflections of the light.

Further, the optical sensor devices comprise a sensor window which forms an outer face of the optical sensor device. The sensor window is typically formed by an optically transmissive protection layer for protecting vulnerable underlying sensor components. Light is thus transmitted and detected through the sensor window, and in order to obtain an unobstructed view of the environment, the optical sensing device is typically arranged on an outside of the vehicle, wherein the sensor window faces the environment, i.e. facing outwardly from the vehicle.

Being at the outside of the vehicle, the sensing device, specifically the sensor window, is susceptible to collect impediments, such as (rain) droplets, particulates, bugs, etc., that could obstruct, deflect other otherwise interfere with the optical signals sent and received by the sensing device through the sensor window, resulting in erroneous or poor sensor data.

### SUMMARY

It is an aim of the invention to reduce the collection and/or accumulation of contaminants e.g. (rain) droplets, particulates, bugs, etc., on a sensor window of an optical sensing device. It is particularly an aim to efficiently and effectively clean the sensor window of a sensing device of a vehicle.

According to a first aspect is provided a modular cleaning system for cleaning a sensor window of an optical sensing device of a motor vehicle. The system comprises a housing module for cooperating with the sensing device, comprising a window opening, that defines a sensor window plane, for receiving therein the sensor window of the optical sensing device; a wiper module including a wiper for wiping the sensor window; a drive module, having a rotary output organ; and a kinematic transformer module interconnected between the drive module and the wiper module and configured for transforming a rotation of the rotary output organ of the drive module so as to drive the wiper in a cyclic wiper trajectory of the wiper. The modules of the cleaning system can be assembled to form the cleaning system for cleaning the optical sensing device, wherein each of the modules may individually be adapted to suit a particular type of optical sensing device.

It will be appreciated that the sensor window plane is a virtual plane, which associates with a plane in which the sensor window extends, at least in use.. The sensor window plane, being defined by the sensor window opening of the housing module, and the plane in which the sensor window of the sensing device extends thus, coincide. It will further be appreciated that the sensor window of the sensing device can be substantially flat, or alternatively curved in a desired shape, for example convex with a desired curvature to optimize a viewing angle of the optical sensing device. It will accordingly be appreciated that the sensor window plane need not be substantially flat, but may also be curved, for example convex with a desired curvature.

The housing module may act as a mounting frame e.g., for mounting thereon the drive module, the kinematic transformer module, and/or the sensing device. The housing module may be part of the vehicle, and can be arranged to hold the sensing device.

The cyclic wiper trajectory may comprise a wiping section in which the wiper is driven substantially in the sensor window plane so as to wipe the sensor window, and a non-wiping section in which the wiper is driven at a distance away from the sensor window plane without wiping the sensor window. The wiper may be driven alternately between the wiping section and the non-wiping section, wherein a cycle of the wiper trajectory includes at least the wiping section and the non-wiping section. The wiper trajectory may be a linear trajectory. i.e. describing a back-and-forth motion wherein the wiping section substantially overlaps with the non-wiping section, however, the wiper trajectory is preferably a closed trajectory, particularly an endless closed trajectory, wherein the wiping section and non-wiping section are substantially non-overlapping. The wiper trajectory may for example be kidney-shaped. The wiping section of the wiper trajectory particularly corresponds to a wiping stroke from a first end of the sensor window to a second end of the sensor window, whereas the non-wiping section of the wiper trajectory corresponds to a return stroke from the second end back to the first end while refraining from wiping the sensor window. It was found that unidirectional wiping gives optimal cleaning results, in particular in contrast to bi-direction wiping. More particular, unidirectional wiping avoids that contaminants which are wiped off the sensor window in the wiping section of the wiping trajectory of the wiper, is reintroduced onto the sensor window. Refraining from wiping, at least in the non-wiping section of the wiper trajectory also prevents a liquid film from remaining on the sensor window after wiping, for example in the sensor window is wet. In the wiping section of the wiper trajectory, the wiper is preferably driven from a top end of the sensor window, over the sensor window, to a bottom end of the sensor window, i.e. in a direction of the gravity vector. The wiper is preferably engaged with the sensor window while being driven along the wiping section, whereas the wiper is disengaged from the sensor window while being driven along the non-wiping section. The wiper may be disengaged from the sensor window by tilting the wiper, or moving the wiper away from the sensor window plane.

The system can be arranged to move the wiper along a first section of the wiper trajectory having a directional component parallel to the sensor window plane, and to move the wiper along a second section of the wiper trajectory having a directional component transverse to the sensor window plane. In the first wiper trajectory section, the wiper is moved parallel to the sensor window plane, whereas in the second wiper trajectory section, the wiper is moved, at least substantially, transverse to the sensor window plane, away from the sensor window. The wiper may for example wipe the sensor window in the first wiper trajectory section, and, at the end of the first section disengages from the sensor window of the sensing device. Once disengaged, the wiper may be driven back along a return section while being disengaged from the sensor window.

The wiping section of the wiper trajectory may for example be substantially rectilinear, for wiping a substantially flat sensor window. The non-wiping section may for example be substantially curved.

The kinematic transformer module may comprise a linkage mechanism, having an input connected to the rotary output organ of the drive module and an output connected to the wiper module. A linkage mechanism can provide a compact and effective way to transform the rotary motion of the rotary output organ of the drive module to a cyclic trajectory of the wiper. Furthermore, a linkage mechanism is particularly adaptable to impose a wide variety of movements on the wiper. Accordingly, the linkage mechanism can be customized to various sensor window curvatures, while the drive module can substantially remain unaltered. The system may particularly comprise two linkage mechanisms, provided on opposite sides of the sensor window opening, for connecting to opposite sides of the wiper module. The two linkage mechanisms may be interconnected, to run synchronous, for example by means of a common drive shaft.

Despite that the wiper does not wipe the sensor window in the non-wiping section of the wiper trajectory, debris that may have collected on the wiper could nonetheless end up on the sensor window by the movement of the wiper along non-wiping section. In particular in moving vehicles, e.g. driving cars, debris on the wiper may be blown onto the sensor window when the wiper is driven along the non-wiping trajectory. The wiper trajectory may thus include an initial point in which the wiper assumes an initial position at or near an edge of the window opening, wherein the system is arranged to drive the wiper from the initial position, along the wiper trajectory, firstly through the non-wiping section and secondly through the wiping section. This way, a cleaning cycle of the wiper ends after the wiping section, i.e. after the sensor window is wiped clean. The initial point of the wiper trajectory denotes a starting state of the cleaning system from which state the cleaning system can be activated to perform a cleaning program to clean the sensor window of the sensing device. The initial positions hence denotes passive state of the cleaning system, in which the cleaning system does not interfere with the sensing device. It will be appreciated that the wiper may be positioned outside a field of view of the sensing device while in the initial position. In the initial position, the wiper is for example positioned on a housing module part outside of the sensor window opening.

The system may for example comprise a control unit, operatively connected to the drive module, for controlling a movement of the wiper. The control unit can for example contain several control programs, e.g. in a memory of the control unit, which control programs may be selectively executed. For example, the control unit could contain a wiping program, wherein the wiping program includes one or more wipe cycles, i.e. the wiper being driven one or more times along the cyclic wiper trajectory. For example, the wiper may be driven from the initial position, e.g. at or near an edge of the window opening, consecutively multiple times along the wiper trajectory, wherein the wiper assumes the initial position at the end of the wiping program to await further instructions of the control unit. The wiping program may have a predefined time length, such as at most 15 seconds, preferably at most 10 seconds, more preferably at most 5 seconds, e.g. at most 2 seconds, so that the sensor window is minimally obstructed by the wiper during wiping.

The system may comprise a moistening device having one or more nozzles for moistening the sensor window. The sensor window may particularly be moistened with a cleaning medium, e.g. a cleaning liquid such as water, optionally provided with one or more cleaning additives, detergents, anti-freeze, surfactants, etc.. The cleaning medium may be deposited onto the sensor window by the one or more nozzles. Depositing the cleaning medium on the sensor window may involve non-forcefully impacting the sensor window, enabling minimal usage of cleaning medium. Using an impacting jet of cleaning medium on the other hand, for mechanically removing contaminants from the sensor window, requires abundant amounts of cleaning medium. It is preferred to deposit a thin film of cleaning medium onto the sensor window, covering the entire sensor window, prior to wiping the sensor window. The cleaning medium can soak the sensor window, so as to loosen the contaminants from the sensor window, wherein the wiper can subsequently mechanically remove the contaminants from the sensor window, along with the deposited cleaning medium. The control unit may be arranged to activate the moistening device for releasing from the nozzles a predefined dose of cleaning medium, at a predefined instance. The control unit may for example control a pressure at which the cleaning medium is released from the nozzles, and/or a duration of release of cleaning medium from the nozzles. The control unit for example controls a valve and/or pump of the moistening device. Whether or not the sensor window is to be moistened by the moistening device can be based on a state of the cleaning system, a state of the vehicle and/or a state of the sensing device.

The one or more nozzles of the moistening device may be movably arranged relative to the housing module, wherein the system is arranged for moving the one or more nozzles over the sensor window so as to moisten the sensor window. In particular for vehicles in motion, e.g. driving cars, the apparent wind induced by the vehicle's velocity could blow away some of the cleaning medium before it reaches the sensor window. Hence, by moving the nozzles over the sensor window of the sensing device, the cleaning medium is accurately and efficiently deposited over the entire surface of the sensor window, avoiding to waste cleaning medium. The system can particularly comprise an array of nozzles which array extends linearly across the sensor window opening in a first direction, wherein the system is arranged to drive the array of nozzles over the sensor window in a second direction, perpendicular to the first direction, so as to deposit a film of cleaning medium on the sensor window in a scanning motion. The array of nozzles for example comprises 5 to 20 nozzles per 100 mm length of the array, preferably about 10 to 15 nozzles per 100 mm length of the array. The nozzles may be linearly and equidistantly arranged in a row.

The array of nozzles can be driven parallel to the sensor window plane, for depositing a uniform film of cleaning medium over the sensor window. Also, it is preferred that the system is arranged to drive the array of nozzles at a substantially constant velocity over the sensor window, at least while releasing the cleaning medium.

The one or more nozzles may for example be arranged on the wiper module, more particular on a wiper frame of the wiper module. This provides a particular compact cleaning system.

The one or more nozzles may be oriented at an oblique angle relative to the sensor window plane. Depositing the cleaning medium onto the sensor window at an angle, instead of perpendicular, allows the cleaning medium to optimally adhere to the sensor window. Hence, efficient use is made of the amount of released cleaning medium in relation to the amount of cleaning medium that adheres to the sensor window. It furthermore contributes to a uniform moistening of sensor window the cleaning medium.

The control unit may be arranged to activate the moistening device. For example, the wiping program contained by the control unit, may include depositing of the cleaning medium onto the sensor window.

The system can be arranged to moisten the sensor window, in use, while the wiper is driven along the non-wiping section of the cyclic wiper trajectory. This way, the cleaning medium is deposited on the sensor window, where it can settle and soak the sensor window, before it is wiped off from the sensor window, along with contaminants, in the wiping section of the wiper trajectory. The system can be arranged to refrain from releasing the cleaning medium when the wiper is driven along the wiping section of the cyclic wiper trajectory.

The system may be arranged to deposit, in use with the moistening device, 2-20 mL of cleaning medium onto the sensor window in a single cycle of the wiper trajectory. The moistening device particularly releases 2-20 mL of cleaning medium from the nozzles. For efficient use of the cleaning medium, it is preferred that substantially all of the released cleaning medium is deposited on and adheres to the sensor window. The cleaning fluid deposited on the sensor window pane may soak the sensor window during a predetermined period of time, prior to wiping the sensor window with the wiper. The control unit can be arranged to dose the cleaning medium to be released, for example depending on a degree of contamination of the sensor window. It will be appreciated that the cleaning medium need not be deposited onto the cleaning medium every cycle of the wiper trajectory. For example, a wiping program contained by the control unit, may include moistening the sensor window in a first cycle of the wiper trajectory, and not moistening the sensor window in a second subsequent cycle of the wiper trajectory.

The system may comprise a shielding cover for at least partly shielding the window opening, wherein the system is arranged to move the shielding cover relative to the housing module between a closed state in which the shielding cover at least partly covers the window opening, and an open state, in which the shielding has uncovered the window opening. The shielding cover provides a protective layer to protect the sensing device when the sensing device is not used, for example when the vehicle is not operated/operating. For example in cars, the shielding cover may be closed, i.e. covering the sensor window, when the car is parked. Moreover, the shielding cover provides a shield for apparent wind induced by the velocity of the moving vehicle, while moistening the sensor window, e.g. when releasing the cleaning medium form the nozzles. The shielding cover can thus prevent the cleaning medium from blowing away before it could adhere to the sensor window. The system may thus be arranged to cover, at least partly, the window opening at least during the release of a cleaning medium onto the sensor window.

The shielding cover may be slidably receivable in a cavity of the housing module, the system being arranged to move the shielding cover relative to the housing module between the closed state, in which the shielding cover extends substantially parallel to the sensor window plane so as to cover the sensor window, and the open state, in which the shielding cover is slidably received in the cavity and extends substantially transverse to the sensor window plane. This provides a particular compact set up. The housing module may comprise a linear guide for guiding the shielding cover into the cavity.

The shielding cover may be coupled to the wiper module. This way, the shielding cover is moved between the open state and the closed state along with a movement of the wiper module. No dedicated drive means for driving the shielding cover is thus required. The shielding cover may be particularly pivotally coupled to the wiper module for allowing the shielding cover to pivot between being parallel to the sensor window plane in the closed state and being substantially transverse to the sensor window plane in the open state.

The wiper trajectory may include a park point in which the wiper assumes a park position at or near an edge of the window opening opposite the initial position, wherein the system is arranged to drive the wiper from the park position to the initial position through the wiping section of the wiper trajectory, and wherein the system is arranged to moisten the sensor window while driving the wiper from the park position to the initial position. The park point of the wiper trajectory denotes a parking state of the cleaning system in which the cleaning system assumes an inactive state, particularly during parking of the vehicle. The control unit may comprise a park program, which park program includes driving the wiper from the initial point to the park point on the wiper trajectory through the non-wiping section, and keeping the wiper at the park position, e.g. at least as long as the vehicle is parked. The control unit may also comprise an initiating program, which initiating program includes driving the wiper from the park point to the initial point on the wiper trajectory through the wiping section, and moistening the sensor window before to wiping the sensor window.

The nozzles may be arranged on the wiper module between the shielding cover and the window opening.

The system is preferably arranged to at least partly cover the sensor window, with the shielding cover when, in use, the cleaning medium is deposited onto the sensor window.

In a second aspect is provided a wiper module, in particular for a system in accordance with the first aspect. The wiper module comprises a wiper frame, wherein the wiper frame includes a first guide member arranged for cooperating with the housing module for guiding a movement of the wiper frame in a direction substantially parallel to the sensor window plane, and a second guide member arranged for cooperating with the wiper for guiding a movement of the wiper relative to the wiper frame in a direction transverse to the sensor window plane. When the wiper is driven by the kinematic transformer module, the wiper is moved, at least in a part of the wiper trajectory, transverse to the sensor window plane, e.g. for disengaging the sensor window, while the wiper frame is linearly guided parallel to the sensor window plane. The first guide member imposes a linear, reciprocal, motion on the wiper frame parallel to the sensor window plane, wherein the wiper is allowed to move, relative to the wiper frame, in a direction transverse to the sensor window plane.

The wiper may be connected to an output of the kinematic transformer module, and comprises an entrainment surface for entraining the wiper frame along with a movement of the wiper. The wiper, being directly coupled to the kinematic transformer module, entrains the wiper frame, wherein a linear motion is imposed on the wiper frame by the first guide member.

The wiper may rotationally freely couple to an output of the kinematic transformer module. Also, the wiper frame may be arranged to rotationally lock the wiper. This allows the wiper to maintain a fixed orientation with respect to the sensor window plane, despite possible rotations of output of the kinematic transformer module.

The wiper, being arranged for wiping the sensor window, and may include a blade, sponge, cloth, or similar.

Optionally, the wiper comprises a wiper blade and a wiper blade holder for holding the wiper blade, wherein the wiper blade is spring-loadedly movable relative to the wiper blade holder in a direction transverse to the sensor window plane. The wiper blade may engage the sensor window under pretensioned of a spring element of the wiper, wherein the spring element allows for adaptation to possible unevenness of the sensor window, or a mismatch between a shape of the wiper blade and the sensor window.

The wiper may be releasable coupled to the wiper frame, such that the wiper can be removed from the wiper frame and replaced with a novel wiper.

The wiper blade is optionally made of a resilient material, such as rubber or similar.

The system may comprise a control unit arranged for controlling a rotary motion of the rotary output organ of the drive module. Hence, by controlling the rotary output organ, the control unit may control movement of the wiper along the wiper trajectory. The controller may for example control a motor of the drive module, which motor is connected to the rotary output organ, e.g. through a transmission.

The system may comprise a position sensor for sensing a position of the wiper in the wiper trajectory. The position sensor may be connected to the controller such that the controller can control the rotary output organ based on a position of the wiper in the wiper trajectory.

The control unit may be arranged for controlling the moistening device. This way, the control unit can e.g. activate and/or deactivate the moistening device so as to release a predetermined amount of cleaning medium.

The control unit may be programmed to include a control mode in which the cleaning medium is released, by the moistening device, while the wiper is in the non-wiping section of the wiper trajectory, and/or in which the moistening device refrains from releasing the cleaning medium while the wiper is in the wiping section of the wiper trajectory. This allows the cleaning medium to soak the sensor window, which facilitates removal of contaminants from the sensor window by the wiper.

The control unit may be programmed to include a control mode in which a motion of the wiper is intermitted for a predetermined soaking time, after release of the cleaning medium. By allowing the cleaning medium to soak the sensor window during the soaking time period, contaminants are easily removable from the sensor window by the wiper. It moreover allows for minimal usage of cleaning medium as the cleaning medium need not be used for forcefully spraying off contaminants. Spraying contaminants off the sensor window by force requires abundant amounts of cleaning medium that splashes off the sensor window along with contaminants.

The control unit may be programmed to include a control mode in which the cleaning medium is released from the one or more nozzles of the moistening device, while the nozzles face a scraping unit of the cleaning system. This way, the scraping unit can be cleaned, and optionally also the nozzles.

The control unit may be programmed to include a control mode in which the moistening device refrains from releasing a cleaning medium during at least an entire cycle of the wiper trajectory. The cleaning system for example refrains from moistening the sensor window in case the sensor window is already wet, for instance due to rain.

The control unit may be programmed to include a control mode in which the cleaning medium is released with the moistening device while the wiper is at the wiping section of the wiper trajectory, particular in case the sensor window is dry, to prevent scratching of the sensor window. This control mode may be part of a control program which includes driving the wiper from the initial point to the park point on the wiper trajectory through the non-wiping section, and keeping the wiper at the park position, e.g. at least as long as the vehicle is parked, as well as driving the wiper from the park point to the initial point on the wiper trajectory through the wiping section, while moistening the sensor window.

The control unit may be programmed to include a control mode in which 2-20 mL of liquid cleaning medium is released with the moistening device per cycle of the wiper trajectory.

The control unit may be programmed to include a control mode in which the sensor window opening is at least partly covered by the shielding cover while the cleaning medium is released with the moistening device.

The control unit may comprise a memory for storing one or more control programs. The control unit may further comprise a processor arranged for selectively executing any of the control programs. The processor may also process information received by a receiver of the control unit through a communication port, e.g. information from a vehicle communication network. The control unit may also comprise a transmitter for transmitting information, e.g. trough the communication port to the vehicle communication network.

According to a third aspect is provided a snap connection between a first link body and a second link body. The snap connection is described herein in conjunction with a kinematic transformer module, particularly a linkage mechanism, for a modular cleaning system, however, the snap connection can also be used in various other applications, such as in various scissor mechanisms and adjustment mechanisms, e.g. tilt windows, etc. The snap connection comprises a first link body having a male connector organ extending in an axial direction outward from the first link body, and a second link body having a female connector organ, wherein the male connector organ is insertable into the female connector organ to snappingly connect the first link body and the second link body with each other, and wherein, when connected, the female connector organ radially bears the male connector organ at a radial bearing interface between the male connector organ and the female connector organ such that the first link body and the second link body are pivotable relative to each other in a plane transverse to the axial direction, and the female connector organ blocks an axial movement of the male connector organ at a blocking interface between the male connector organ and the second connector member, wherein the blocking interface and the radial bearing interface are axially separated from one another.

The spatial separation of the radial bearing interface and the axial blocking interface yields a robust and sturdy pivot connection between the link bodies. Moreover, the radial bearing interface may be optimized for smooth rotation about the pivot axis, whereas the axial blocking interface may be optimized, separately from the radial bearing interface, for blocking a relative axial displacement of the first and second link bodies. The radial bearing interface allows a relative rotation of the first link body and the second link body, about the pivot axis, while constraining a relative lateral displacement of the first link body and the second link body in the plane transverse to the pivot axis. The axial bearing interface also allows a relative rotation of the first link body and the second link body, about the pivot axis, while constraining a relative axial displacement of the first link body and the second link body in the axial direction of the male connector organ. The male connector organ for example comprises/is a cylindrically shaped projection that projects outwardly from the first link body. At or near an open end of the cylindrical projection, the male connector organ may comprise an edge, e.g. formed by an indentation, e.g. circumferentially around the male connector organ that cooperates with a blocking organ of the female connector organ. The female connector organ for example comprises/is a circular through hole through the second link body, for receiving there through the male connector organ of the first link body. The male connector organ can be inserted through the through hole of the female connector organ in axial direction, wherein, in a connected state, the male connector organ may extend through the through hole of the female connector organ, to protrude on either side of the second link body. The indentation at or near the open end of the male connector organ may protrude through the through hole, to interact, e.g. snappingly, with a blocking organ to prohibit axial movement of the male connector organ. Hence, the radial bearing interface may be provided where a wall defining the through hole of the female connector organ opening and the mantle of the cylindrical male connector organ contact. The blocking interface, being axially spaced from the bearing interface, is for instance provided where the indentation and the blocking organ interact.

The male connector organ may be integrally formed with the first link body. Also, the female connector organ may be integrally formed with the second link body. The first and second link bodies may for example be injection moulded.

The female connector organ may comprise a blocking organ for blocking the axial movement of the male connector organ. The blocking organ can comprise a flap that cooperates with an indentation in the male connector organ. The flap particularly protrudes outwardly from the main second link body, e.g. at a side of the second link body opposite an insertion side where the male connector organ of the first link body is inserted into the female connector organ of the second link body. The flap may be substantially rigid to minimize axial movement of the male connector organ when axially loaded, but may optionally be arranged to deflect in order to prevent damage in case of large axial loads.

The snap connection may comprise, between the first and second link body, a spacer for spacing the first link body and the second link body apart, when connected. For example, the first link body may comprise, between the first and second link body, a first ridge being integrally formed with the first link body and forming a first bearing surface and/or wherein the second link body comprises, and between the first and second link body, a second ridge being integrally formed with the second link body and forming a second bearing surface. The first ridge may project from the first link body circumferentially around the male connector organ. The second ridge may project from second link body circumferentially around the female connector organ. The first ridge and/or the second ridge may include a bearing surface for reducing friction losses in the relative rotation between the first link body and the second link body.

The third aspect particularly relates to a kinematic transformer module, in particular for a cleaning system as described herein, wherein the kinematic transformer module comprises a linkage mechanism. The linkage mechanism comprises one or more link bodies, including the first link body and the second link body.

The first link body may include an input connector arranged for connecting to an rotary output organ of the drive module, wherein first link body may be rotatably arranged around a drive axis. The second link body may comprise an output connector for connecting to the wiper. The linkage mechanism may be configured for transforming a rotational motion of the first link body around the drive axis to a cyclic wiper trajectory of the output connector of the second link body, wherein the wiper trajectory optionally includes a rectilinear section. The input connector may be free of an axial blocking means, for blocking an axial displacement of the third linkage body relative to the housing module, to prevent overconstraining of the linkage mechanism. The input connector of the first linkage body may comprise an opening for interacting with a drive shaft, wherein the opening rotationally form-fits a connector member of the drive shaft.

The linkage mechanism further comprises a third link body, which third link comprises a male or female connector organ for pivotably connecting to a complementary male or female connector organ of the second link body, particularly at a location of the second link body between the output connector and the female connector for connecting with the first link body, and a housing connector for pivotally connecting to a housing module of the cleaning system. It will be appreciated that the male or female connector organ may be similar, e.g. identical, to the male or female connector organ described in relation first link body and the second link body.

Optionally, the first link body defines a first link having a length A, the second link body defines a second link having a length 4A to 6A, preferably 5A and the third link body defines a third link having a length 2A to 3A, preferably 2.5A. A fourth link can be defined by a distance between the input connector of the first link body and the housing connector of the third link body, the fourth link having a length of A to 4A, preferably 2A. The second link body may particularly connect to the third link body at a distance from the output connector of about 2A to 3A, preferably 2.5A. Such linkage mechanisms is particularly suited for transforming a rotary motion into a kidney shaped trajectory, such as a trajectory with a substantially rectilinear section. A particularly configured linkage mechanism that transforms a rotary motion into a rectilinear motion is often referred to as a Chebyshev Lambda mechanism. Hence, such linkage mechanism is particularly suitable for a cleaning system as described herein, for cleaning a sensor window of a sensing device for a vehicle. The ratios between the links of the linkage mechanism may be adapted to drive an output along a desired trajectory. For example, the ratios may be adapted to impose a trajectory on the output of the linkage mechanism, e.g. the wiper, having a trajectory section that is slightly curved to match a shape of the sensor window.

A securing organ for axially securing the linkage mechanism to the housing module of the cleaning system may be provided. In particular, the securing organ may be integrally formed with any one or more of the link bodies of the linkage mechanism, for example with the third link body. The securing organ may preferably snappingly connect with the housing module for ease of assembly.

The first link body, the second link body, and the third link body may be injection molded.

According to a fourth aspect, there is provided a drive module for driving an object along a cyclic trajectory, in particular for a modular cleaning system as described herein. The drive module comprises a driver housing, the driver housing containing a motor, a rotary output organ connected to the motor through a transmission, and an endless rotary position sensor for determining a rotary position of the output organ, the endless rotary position sensor being connected to the rotary output organ in a fixed relation such that a one or more full rotations of the rotary output organ corresponds to one or more full rotations sensed by the rotary position sensor, and a control unit connected to the rotary position sensor and arranged for controlling a rotation of the rotary output organ. The rotary position sensor allows for determining a rotary position of the rotary output organ. For example, the rotary position sensor may be arranged to sense each full rotation of the rotary output organ. The rotary position sensor is preferably arranged to sense an angular position of the rotary output organ. The fixed relation between the rotary output organ and the rotary positions sensor enables for an accurate determination of a full cycle of the rotary output organ, as well as the angular position of the rotary output organ within a cycle. Preferably, the fixed relation can be such that a single full rotation, i.e. 360 degrees, of the rotary output organ corresponds to a sensed single full rotation by the rotary position sensor, i.e. a 1:1 relation. Alternatively, the fixed relation is such that, e.g., two full rotations of the rotary output organ correspond to a single full rotation sensed by the rotary position sensor, i.e. a 2:1 relation, or vice versa, that a single full rotations of the rotary output organ corresponds to two full rotations sensed by the rotary position sensor, i.e. a 1:2 relation. The rotary position sensor may be an endless potentiometer for example that is fixedly connected relative to the rotary output organ, for example via a 1:1 gearing. For driving an object cyclically on a closed endless trajectory, e.g. a trajectory without end stops, it is particularly practical to provide an endless rotary sensor that is able to continuously revolve in the same rotation direction without needing to switch the rotation direction. Moreover, to be able to determine the position of the object on the trajectory, it can be useful to sense the angular position of the rotary output, which maps to a position on the closed endless trajectory.

The drive module may comprising a fluid port for connection to a fluid conduit, and wherein the drive module comprises a valve for selectively opening and closing a fluid conduit. This way, the drive module may control a supply of a fluid, such as a cleaning medium, to e.g. one or more nozzles. The valve may be opened and/or closed based on a rotary position sensed by the rotary position sensor. For example, the control unit may be arranged to selectively open or close the valve in case the rotary output organ has a predetermined angular position. The predetermined angular position for instance maps to the wiper module, which is driven by the dive module, is at a position on the wiper trajectory where releasing of cleaning medium is appropriate.

The drive module may comprise a fluid pump for supplying the fluid under pressure, which fluid pump may be operatively connected to the control unit. A fluid reservoir may be provided for holding a volume of fluid, e.g. cleaning medium. The drive unit or the cleaning system as described herein may comprise a dedicated fluid reservoir for holding a volume of cleaning medium, but it will be appreciated that the drive unit/cleaning system may be fluidly connected to a fluid reservoir of the vehicle.

Optionally, the control unit is arranged for controlling the pump and/or the valve for selectively supplying fluid to the fluid conduit.

The housing module comprises a through hole for receiving a drive shaft therethrough. The rotary output organ of the drive unit may be arranged to engage the drive shaft for driving the drive shaft. The drive shaft can be inserted through the through hole in the drive module housing such that the drive shaft protrudes from either side of the drive module housing. The kinematic transformer unit of the cleaning system as described herein may be connected to the drive shaft, for instance at an end of the drive shaft.

The transmission includes a clutch, for example a friction clutch. This way, the rotary output organ may be decoupled from the motor, to protect damage thereof, in case the rotary output organ is e.g. manually operated or jammed. The clutch is preferably arranged between the motor and the rotary position sensor, to secure a fixed relation between the rotary position sensor and the rotary output organ at all times.

The control unit may comprise a communication port via which the control unit is configured to send and receive information to and from a vehicle communication network. Many vehicles comprise a communication network, such as LIN (Local Interconnect Network) and/or CAN (Controller Area Network) for communicating with several sensors and actuators of the vehicle. The communication port may be particularly arranged for connection to a LIN bus or CAN bus of the vehicle. For example, the drive module may be directly or indirectly connected to the sensor device, e.g. a LiDAR sensor, wherein signals from the sensor device are indicative of a contaminated sensor window that requires cleaning. Information on a state of the sensor device may be communicated over the vehicle communication network. Through the communication network, the drive module may for example be arranged to receive a signal that activates the drive unit so at to drive a wiper module of the cleaning device to clean the sensor device of the vehicle. Also, the control unit may be arranged to activate the moistening device in case the sensor window is dry, and/or refrain from activating the moistening device in case the sensor window is wet. Such information may be communicated by moisture sensors of the vehicle, such as a rain sensor.

The control unit may contain one or more control programs, wherein the control unit is arranged to execute any of said control programs based on information received from the vehicle communication network. The control programs may be stored on a memory of the control unit. The control unit could particularly be arranged to select an appropriate control program based on information received from the vehicle communication network. The control unit may contain multiple different cleaning programs for cleaning the sensor window of the sensor device. For instance, the control unit may comprise a first control program in which the trajectory is cycled through a first number of times; and a second control program in which the trajectory is cycled through a second number of times. The first control program may further involve releasing of a first amount of cleaning medium, and the second control program may involve releasing of a second amount of cleaning medium.

The control unit for example contains a cleaning program in which the cleaning medium is released, by the moistening device, while the wiper is in the non-wiping section of the wiper trajectory, and/or in which the moistening device refrains from releasing the cleaning medium while the wiper is in the wiping section of the wiper trajectory.

The cleaning program for example includes intermitting a motion of the wiper for a predetermined soaking time, after release of the cleaning medium. The predetermined soaking time can lie for example in a range of 0.2 to 8 seconds, particularly in a range of 0.5 to 2 seconds, such as about 1 second. The predetermined soaking time can occupy a substantial portion of an overall cycle time, which overall cycle time is defined as the time for the wiper to complete a single cycle of the wiper trajectory. For instance, the predetermined soaking time can be 10 to 50 percent, more particular 20 to 40 percent, such as about 25 percent of the overall cycle time.

The cleaning program for example includes at least partly covering, with the shielding cover, the sensor window opening while releasing the cleaning medium.

The shielding cover may for example be moved over the sensor window opening upon powering of the vehicle and/or the sensing device. The shielding cover may be moved away from the sensor window opening, uncovering the sensor window opening, upon powering off of the vehicle and/or the sensing device.

The cleaning program for example includes cycling the wiper multiple times through the wiper trajectory.

The cleaning program for example includes releasing 2-20 mL of liquid cleaning medium in a single cycle of the wiper trajectory.

The control unit for example contains a start-up program in which the cleaning medium is released with the moistening device while the wiper is in the wiping section of the wiper trajectory, particular in case the sensor window is dry, to prevent scratching of the sensor window by the wiper.

The control unit for example contains a rain-program in which the moistening device refrains from releasing a cleaning medium during at least an entire cycle of the wiper trajectory. Information regarding the state of the sensor window may be communicated to the drive unit through the vehicle communication network. For instance, a rain sensor of the vehicle may provide information whether or not it rains, which may be indicative of whether or not the sensor window is wet.

The control unit for example contains a self-cleaning program in which the cleaning medium is released from the one or more nozzles of the moistening device, while the nozzles face a scraping unit of the cleaning system.

It will be appreciated that any of the control programs, and control modes described herein may be combined, in any order.

According to a fifth aspect there is provided an assembly of a cleaning system as described herein and an optical sensing device comprising a sensor window.

According to sixth aspect there is provided a vehicle comprising a cleaning system or an assembly as described herein.

According to a seventh aspect there is provided a method for cleaning a sensor window of an optical sensing device as described herein, particularly using a cleaning system as described herein.

It will be appreciated that any one or more of the above aspects, features and options can be combined. It will be appreciated that any one of the options described in view of one of the aspects can be applied equally to any of the other aspects. It will also be clear that all aspects, features and options described in view of the drive module apply equally to the cleaning system. It will also be clear that all aspects, features and options described in view of the cleaning system apply equally to the vehicle and the method.

### BRIEF DESCRIPTION OF THE DRAWINGS

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawings:
Figure 1 shows an exploded view of a cleaning system;
Figures 2A and 2B show a perspective view of a cleaning system;
Figure 3 shows a frontal view of a cleaning system;
Figures 4-9 show a cross sectional view of a cleaning system in different states;
Figures 10A shows a wiper of a cleaning system
Figure 10B shows a detailed cross sectional view of the wiper of Figure 10A;
Figure 11 shows a schematic example of a kinematic transformer module for a cleaning system;
Figure 12A shows a perspective view of pivotable snap connection;
Figure 12B shows a cross sectional view of the snap connection of Figure 12A;
Figure 13 shows a perspective view of a drive module for a cleaning system;
Figures 14A and 14B shows a frontal view of the drive module.

### DETAILED DESCRIPTION

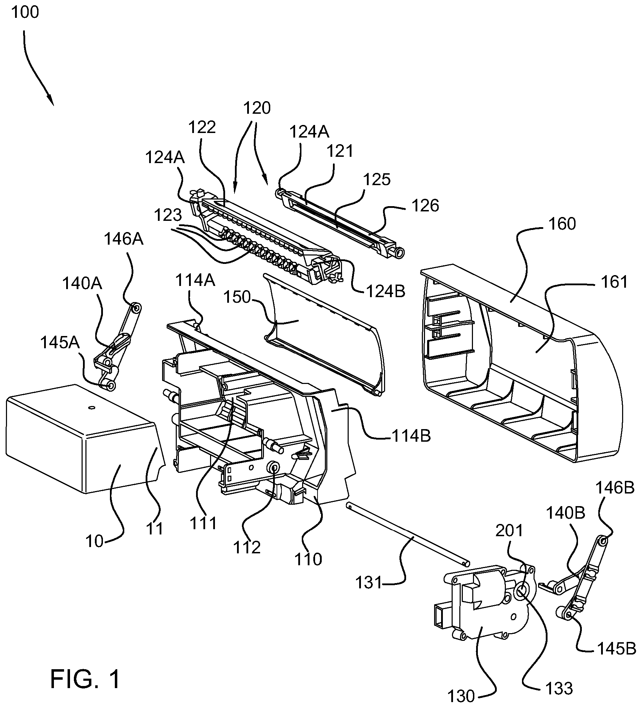

Figure 1 shows an exploded view of a modular cleaning system 100 for cleaning a sensor window of an optical sensing device, in this particular example a LiDAR sensor 10. The LiDAR sensor 10 comprises a sensor window 11, which is typically formed by an optically transmissive material, for sending and receiving optical signals therethrough. The modular cleaning system 100 comprises several modules that can be manufactured separately and assembled to form the cleaning system 100.

The cleaning system 100 comprises a housing module 110 that includes a provision for receiving the LiDAR sensor 10. The housing module 110 comprises a window opening 111 that defines a sensor window plane for receiving therein the sensor window 11 of the LiDAR sensor 10. When installed, the sensor window 11 of the LiDAR sensor 10 extends in the sensor window opening 111 of the housing module 110, wherein the sensor window plane defined by the sensor window opening 111 and the sensor window 11 coincide.

The cleaning system 100 further comprises a wiper module 120 for wiping the sensor window 11 of the LiDAR sensor 10, which wiper module 120 in turn comprises a wiper 121 and a wiper frame 122. The wiper module 120 is movably arranged relative to the housing module 110 so as to move across and wipe the sensor window 11 of the LiDAR sensor 10. The wiper 121 is in turn movably coupled to the wiper frame 122. The wiper 121 comprises a wiper blade 125 and a wiper blade holder 126, wherein the wiper blade 125, in use of the cleaning system, extends between two lateral ends of the sensor window 11, and substantially spans the entire width of the sensor window 11. The wiper module 120 is driven over the sensor window 11 in a direction perpendicular to the direction in which the wiper blade extends 125.

The wiper module 120 further comprises an array of nozzles 123 of a moistening device, supported by the wiper frame 122, on a side of the wiper module 120 that faces the sensor window opening 111, when assembled. The array of nozzles 123 also extends between two lateral ends of the sensor window 11, and substantially spans the entire width of the sensor window 11. The nozzles 123 are arranged to deposit a predefined dose of cleaning medium onto the sensor window of the LiDAR sensor.

The cleaning system 100 further comprises a drive module 130 for driving the wiper module 120 over the sensor window 11 of the LiDAR sensor 10. The drive module 130 has rotary output organ 133 that is arranged for coupling to a drive shaft 131. The drive shaft 131 can be received through a shaft opening 112 in the housing module 110. Moreover, the drive shaft can be received through a through hole in the drive module 130, such that the drive shaft 131 protrudes from either side of the drive module 130. The drive shaft 131 rotationally couples to the rotary output organ 133 of the drive module 130.

Interconnected between the drive module 130 and the wiper module 120, is provided a kinematic transformer module, here embodied as linkage mechanisms 140. It will be appreciated that other kinematic transformer units are also envisioned, such as arrangements with a spindle, a cam, belt drive, chain, guiding tracks, etc.. In the example of Figure 1, the kinematic transformer module comprises a first linkage mechanism 140A and a second linkage mechanism 140B, which is arranged on opposite side of the housing module 110, laterally from the LiDAR sensor 10. The first and second linkage mechanisms 140A, 140B are mirrored with respect to one another. It will be appreciated that the system may comprise only a single linkage mechanism, or more than two linkage mechanisms. The linkage mechanisms 140A, 140B each have an input 145A, 145B that is connected to a rotary output organ of the drive module 130, and an output 146A, 146B that is connected to the wiper 121. The linkage mechanisms 140A, 140B are arranged to transform a rotary output motion of the drive module 130 at the input of the linkage mechanisms 145A, 145B to a cyclic endless closed wiper trajectory of the wiper 121 at the output of the linkage mechanism 146A, 146B. More specific, the linkage mechanisms 140A, 140B are configured in such a way to impose a predefined trajectory to the output 146A, 146B of the linkage mechanisms 140A, 140B, e.g. to the wiper 121.

The kinematic transformer unit, here the linkage mechanisms 140A, 140B, is configured in such a way that the wiper 121 trajectory includes a wiping section and a non-wiping section, to enable unidirectional wiping of the sensor window 11. The kinematic transformer unit is particularly configured in such a way that the wiper 121 trajectory includes a section in which the wiper 121 is moved in a direction substantially transverse to the sensor window plane defined by the sensor window opening 11. Hence, the wiper 121 can be disengaged from the sensor window 11, to be returned to an initial position through the air, without wiping the sensor window 11 of the LiDAR sensor 10.

The cleaning system 100 further comprises a shielding cover 150. The shielding cover 150 is here coupled to the wiper module 120, and is movable between a closed state in which the shielding cover covers the sensor window opening 111, and an open state in which the shielding cover 150 uncovers the sensor window opening 111.

The cleaning system 100 further comprises a protection frame 160, that is provided on an outside of the cleaning system 100, for shielding the various components of the cleaning system 100 from the environment. The protection frame 160 comprises a central opening 161 that aligns, when assembled, with the window opening 111 of the housing module 110, such that the LiDAR sensor 10 can have an unobstructed view of the environment. It will be appreciated that the protection frame 160, and/or the housing module 110, can be integrated with the vehicle.

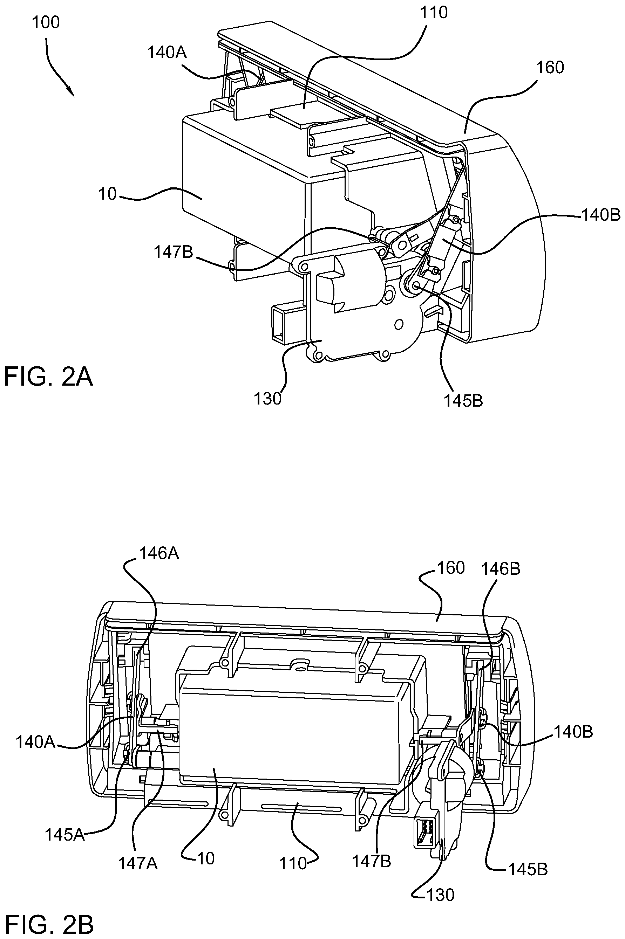

Figures 2A and 2B show two respective perspective views of the cleaning system 100 of Figure 1 in an assembled state. In this example the LiDAR sensor 10 is supported in the housing module 110, and the drive module 130, here coupled to the housing module 110, drives the drive shaft 131, which drive shaft 131 extends in axial direction parallel to the sensor window opening, through the housing module 110. Either end of the drive shaft 131 couples to a linkage mechanism 140A, 140B, wherein the linkage mechanisms 140A, 140B in turn secure to the housing module by means of a securing organ 147A, 147B that snaps behind a cooperating securing organ of the housing module. The securing organs 147A, 147B only axially secures the linkage mechanisms 140A, 140B to the housing module 110 while allowing rotational motion of the links of the linkage mechanisms 140A, 140B.

The wiper module 120 is movably coupled to the housing module 110, particularly slidably relative to the housing module 110, by means of cooperating linear guide members. Hereto, the wiper module 120 comprises first linear guide members 124A, 124B provided on opposite sides of the wiper frame 122, and the housing module 110 comprises linear guide members 114A, 114B provided on opposite lateral sides of the sensor window opening 111.

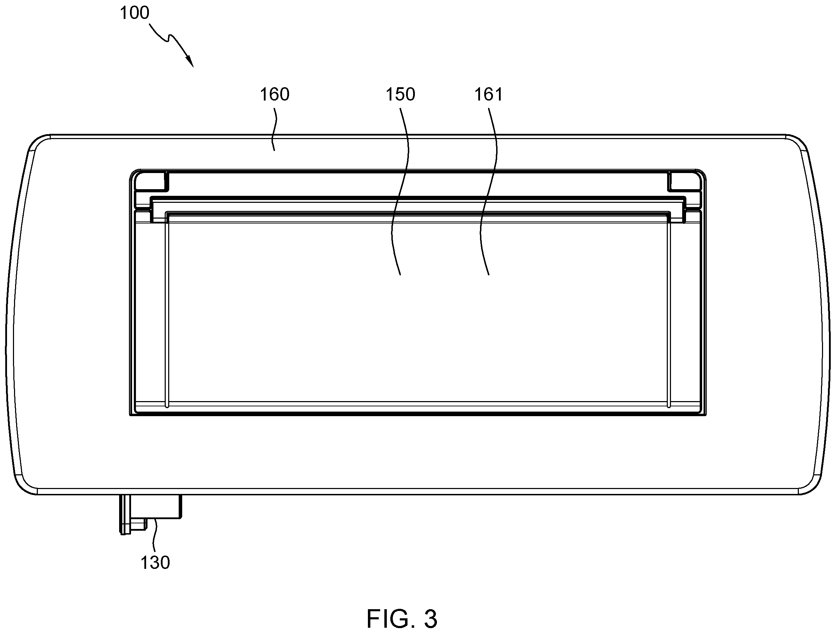

Figure 3 shows a frontal view of the cleaning system 100, wherein the shielding cover 150 assumes a closed position in which it covers the entire sensor window opening 111. The cleaning system 100 can be brought in this particular state for example when the sensor device is not operative, e.g. when the vehicle is parked. It can also be seen that the shielding cover 150 covers substantially the entire central opening 161 of the protection frame 160. This way, the front side of the cleaning system 100, forming the outside of the cleaning system and facing outwardly from the vehicle, is entirely closed.

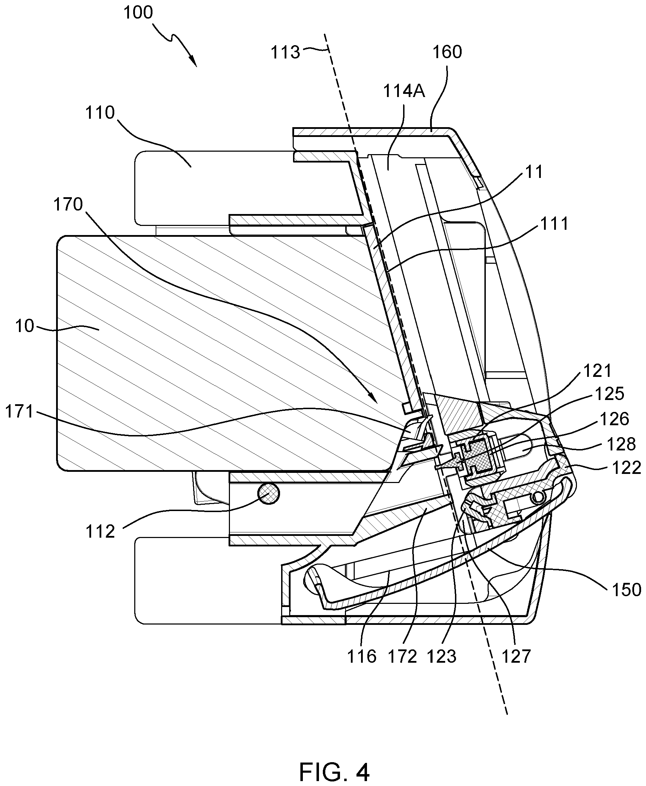

Figures 4-9 show a cross sectional view of the cleaning system 100, wherein each of figures 4-9 depicts the cleaning system 100 in a different state. Figures 4-9 particularly depict several instances of the wiper module 120 while being driven to wipe the sensor window. As best seen in Figures 4-9, the sensor window plane 113, defined by the sensor window opening 111, coincides with the plane in which the sensor window 11 of the LiDAR sensor 10 extends.

The wiper module 120 is coupled to the kinematic transformer module 140, yet more specifically, the wiper 121 is coupled to a linkage mechanism 140, which linkage mechanism 140 imposes a predefined cyclic trajectory on the wiper 121, for unidirectionally wiping the sensor window 11. The wiper trajectory includes wiping section in which the sensor window is wiped by the wiper, here from top end of the sensor window 11 to a bottom end of the sensor window 11, in a direction of the gravity vector. A non-wiping section, in which the wiper 121 is returned from the bottom end to the top end while refraining from wiping the sensor window 11, is generally in the opposite direction, from the bottom end towards the top end. The linkage mechanism 140 is not shown in figures 4-9 for clarity. The wiper frame 122, however, is imposed a linear reciprocating motion parallel to the sensor window plane 113, by means of a linear guide. The wiper frame 122 is hereto provided with the first linear guide members 124A, 124B, and the housing module 110 with cooperating guide members 114A, 114B. To accommodate for a movement of the wiper 121 in a direction transverse to the sensor window plane 113, the wiper frame 122 further comprises a second linear guide member 128. The second linear guide member 128 rotationally locks the wiper 121 such that the wiper 121 is maintained in a substantially constant orientation relative to the sensor window plane 113.

Cleaning of the sensor window 11 involves wiping off contaminants, optionally along with a cleaning medium that has been deposited on the sensor window 11, by means of the nozzles 123 of the moistening device. The nozzles 123 are oriented at an angle with respect to the sensor window plane 113, such that cleaning medium can be evenly deposited on the sensor window 11. The nozzles 123 are provided on the wiper frame 122, below the wiper 121, wherein the nozzles 123 are moved, in a scanning motion, equidistantly across the sensor window 11 for efficiently depositing a film of cleaning medium on the sensor window 11. The nozzles 123 are arranged in an array that extends perpendicular to the plane of the Figures 4-9. The nozzles 123 are separated from one another by partition walls 127, which are positioned between adjacent nozzles 123. This reduces an overlap of deposited cleaning medium on the sensor window 11, by respective nozzles, and hence a uniform layer of cleaning medium can be achieved using minimal volumes of cleaning medium.

As further seen in Figures 4-9, the wiper 121 comprises a wiper blade 125 of a resilient material, e.g. rubber or the like, and a wiper blade holder 126 holding the wiper blade 125.

Figures 4-9 further show, several instances of the shielding cover 150 covering and uncovering the sensor window opening 111. The shielding cover 150 is hingedly connected, at a top side, to the wiper module 120, particularly to the wiper frame 122, and is hence entrained with the movement of the wiper module 120, between an open state in which the shielding cover 150 uncovers the sensor window opening 111, and a closed state in which the shielding cover 150 covers the sensor window opening 111. At a bottom side, the shielding cover 150 is slidably connected to the housing module 110, wherein the housing module 110 comprises a cavity 116 for slidingly receiving therein the shielding cover 150. The cavity 116, here, is located under the provision where the LiDAR sensor 10 is received, and extends substantially transverse to the sensor window plane 113. This results in a very compact setup.

The nozzles 123 are here positioned between the shielding cover 150 and the sensor window plane 113, such that the nozzles 123 are in the lee of the shielding cover 150, which is beneficial for efficiently moistening the sensor window 11, with a minimal release of cleaning medium.

Figure 4 shows a first instance where the wiper 121 is positioned at an initial position near a bottom side of the sensor window, outside of the sensor window opening 111 to avoid obstructing the field of view of the LiDAR sensor 10. At the initial position, the wiper blade 125 does not engage the sensor window 11. The shielding cover 150 is received in the cavity 116 of the housing module 110, and extends substantially transverse to the sensor window plane 113.

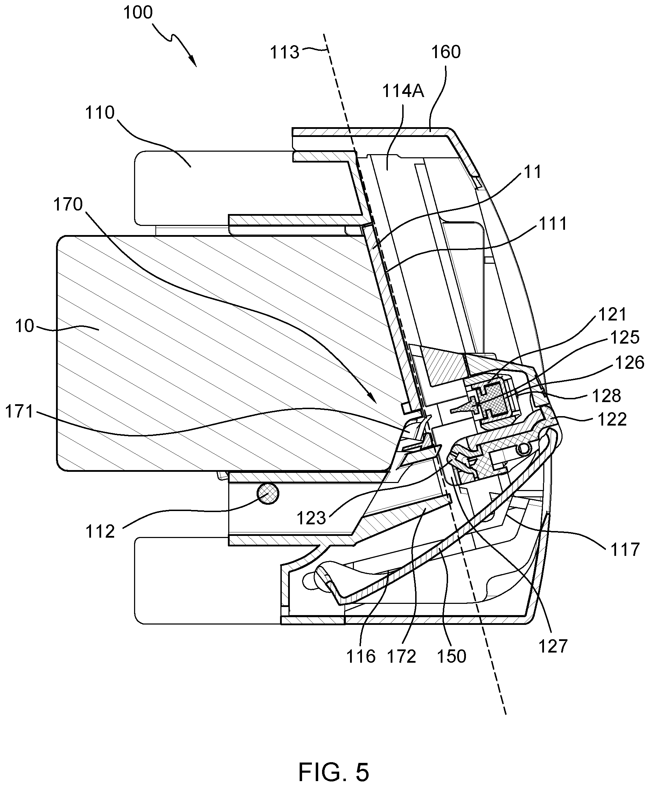

Figure 5 shows a second instance where the wiper 121 has advanced along the wiper trajectory towards a top side of the sensor window opening 111 opposite the initial position. The wiper 121 has been driven from the initial position in a direction transverse and away from the sensor window 11, as well as in a direction parallel and towards a top side of the sensor window 11, wherein the second linear guide member 128 has accommodated for the transverse movement of the wiper 121 relative to the wiper frame 122. In the second instance as shown in figure 5, the wiper does not engage the sensor window 11. Hence, in the second instance, the wiper 121 is at a non-wiping section of the wiper trajectory. It is further seen that the shielding cover 150, being hingedly coupled to the wiper module 120, is entrained with the movement of the wiper module 120.

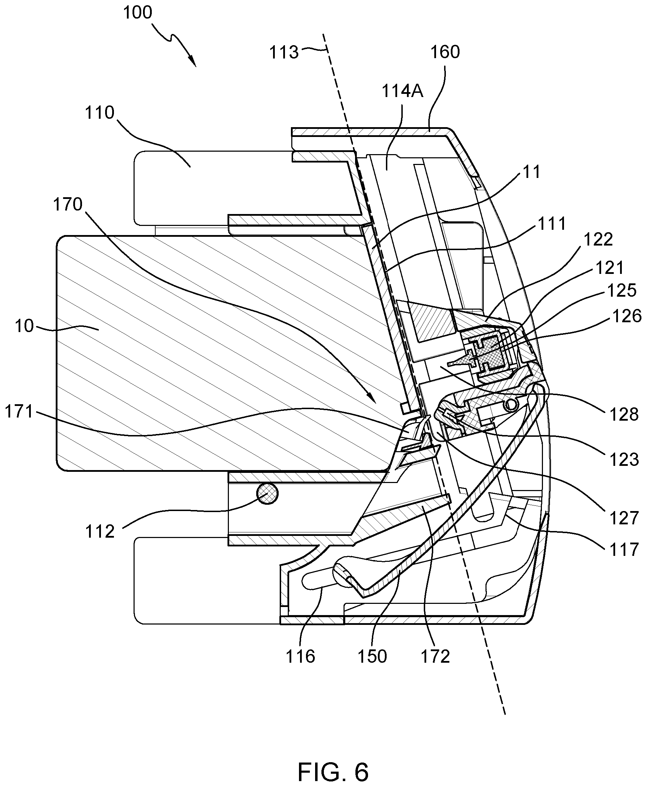

Figure 6 shows a third instance where the wiper 121 has advanced further, with respect to the instance of Figure 5, towards the top side of the sensor widow opening 111. At the third instance, the sensor window 11 has come in a spraying range of the nozzles 123, and hence, nozzles may release a cleaning medium to moisten the sensor window 11 of the LiDAR sensor 10. To avoid wasting cleaning medium, the system is arranged to refrain from releasing the cleaning medium when the sensor window 11 is not in a spraying range of the nozzles 123, for example in first and second the instances. It is further seen, that the nozzles 123 are shielded from (apparent) wind by the shielding cover 150, as well as the wiper frame 122.

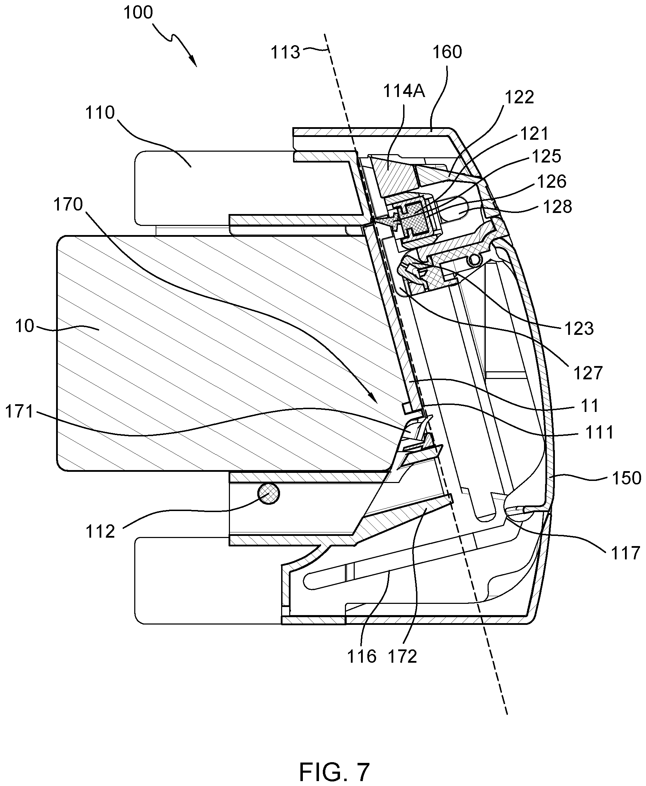

Figure 7 shows a fourth instance where the wiper 121 has advanced and reached the top side of the sensor window opening 111. Towards the top side of the sensor window opening 111, the wiper 121 is driven in a direction transverse and towards the sensor window plane 113. In the fourth instance, as shown in Figure 7, the wiper blade 125 engages the sensor window 11 of the LiDAR sensor 10. It is further seen that in the fourth instance, the shielding cover 150, being entrained by the wiper module 150, assumes a closed position in which the shielding cover extends substantially parallel to the sensor window plane 113, and in which the shielding cover 150 covers sensor window opening 111. Moreover, the shielding cover 150 covers the central opening 161 of the protection frame 160, such that the front side of the cleaning system is entirely closed. The system is preferably brought, and maintained, in the state of the fourth instance, as shown in Figure 7, when the LiDAR sensor 10 in not operative, for instance when the vehicle is parked. To protect the cleaning system 100, and the LiDAR sensor 10 from an impact from the environment, the housing module comprises an abutment surface 117 for opposing a movement of the shielding cover 150 in a direction towards to the sensor window plane 113. The abutment surface 117 is particularly arranged at a bottom side of the sensor window opening 111 so as to oppose a movement of a bottom side of the shielding cover 150, in a direction towards the sensor window 11.

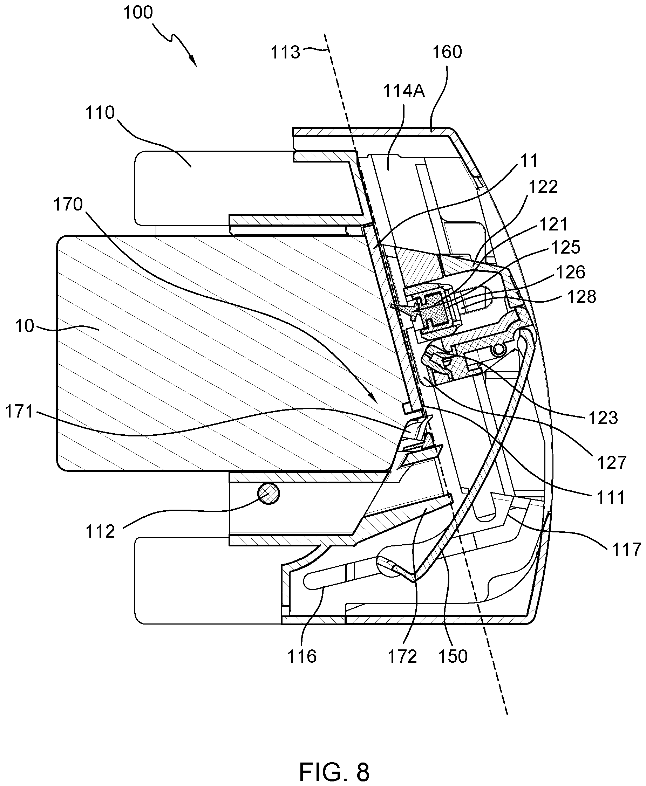

Figure 8 shows a fifth instance where the wiper 121 has advanced from the top side towards the bottom side of the sensor window opening 111. In the fifth instance, the wiper 121 is driven along a wiping section of the wiper trajectory, in which the wiper 121 wipes the sensor window 11. The wiper section is, in this example at least, substantially rectilinear to follow the straight shape of the sensor window 11. It will be appreciated that the kinematic transformer unit 140 can be configured in such a way to adapt the wiper trajectory to a particular shape of the sensor window 11 of the LiDAR sensor. The wiper blade 125, being of a resilient material, is resiliently deformed to effectively wipe the sensor window 11. It is further seen that the shielding cover 150 is driven, by a motion of the wiper module 120 into the cavity 116 of the housing module 110. The nozzles 123 optionally release cleaning medium in the wiping section of the wiper trajectory.

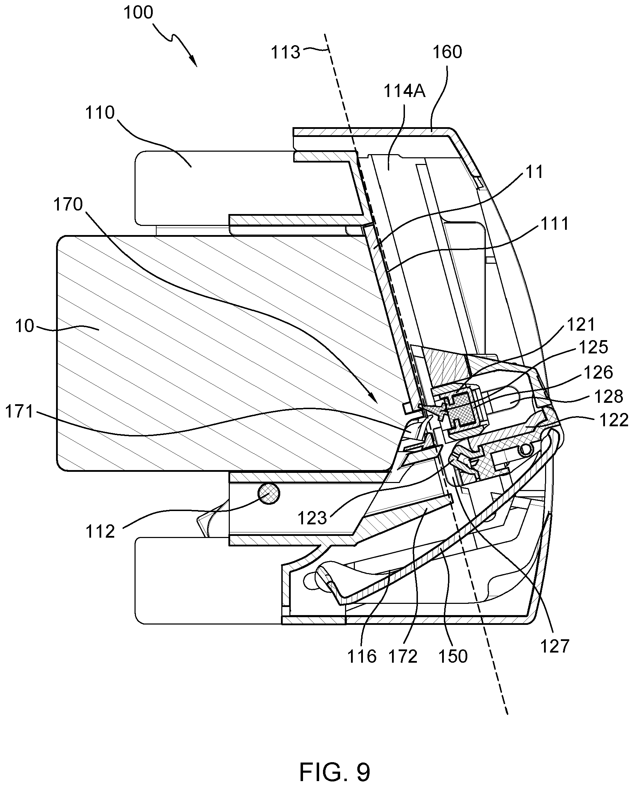

Figure 9 shows a sixth instance where the wiper 121 has reached the bottom end of the sensor window 11. Below the bottom end of the sensor window 11, there is provided a scraper unit 170 for scraping contaminants off the wiper blade 125. The wiper trajectory extends beyond the bottom end of the sensor window 11, across the stationary scraper unit 170, to the first instance as shown in Figure 4. The scraper unit 170 comprises blade scraper 171 configured for scraping the wiper blade 125 and a nozzle scraper 172 configured for scraping the nozzles 123. Scraping the nozzles 123 clean with the nozzle scraper 172 prevents occlusions of the nozzles 123.

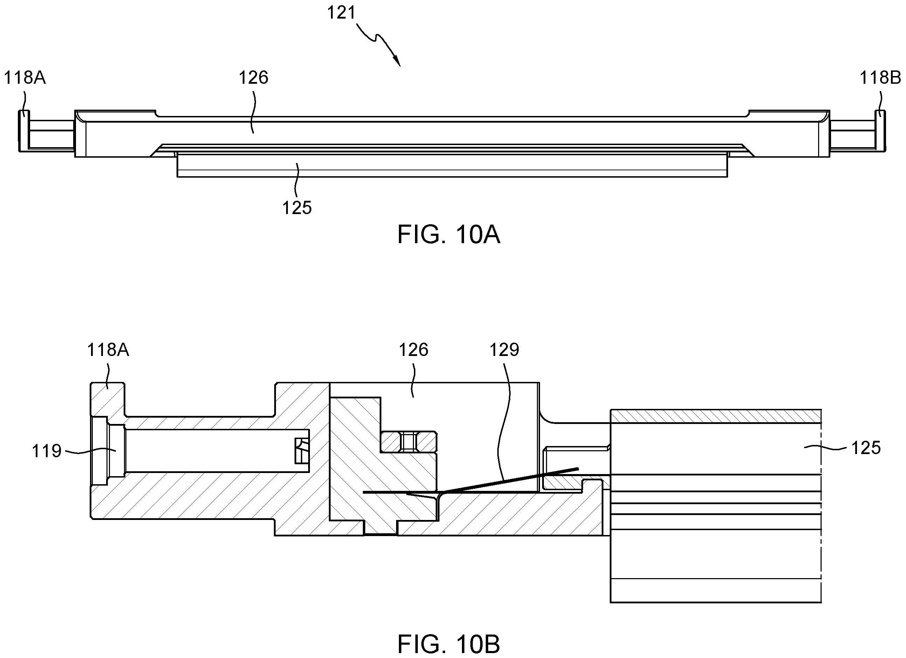

Figure 10A shows a wiper 121 of the wiper module 120. The wiper 121 comprises a wiper blade 125 and a wiper blade holder 126. The wiper blade holder 126 extends between two opposing ends, wherein each end includes a guide member 118A, 118B for cooperating with the second linear guide member 128 of the wiper frame 122 of the wiper module 120.

Figure 10B a detailed cross sectional view of the wiper 121 of Figure 10A. It can be seen that the wiper blade 125 is springloadingly coupled to the wiper blade holder 126, by means of a spring element, in this example a leaf spring 129 that is clamped by the wiper blade holder. The wiper blade 125 can be brought in engagement with the sensor window under spring tension to effectively wipe the sensor window 11. This further allows for a movement of the wiper blade 125 relative to the wiper blade holder 126 in a direction transverse the sensor window 11 in order to adapt to a minor, e.g. unintentional, offset between the sensor window plane and the wiping section of the wiper trajectory. Such offset can for instance occur due dimension tolerances of the components of the cleaning system 100.

At the end of the wiper blade holder 126 is provided a coupling member, here a female coupling organ 119, for coupling to an output of the kinematic transformer module, e.g. the linkage mechanism 140. The wiper blade holder 126 is particularly, rotationally freely coupled to the linkage mechanism 140.

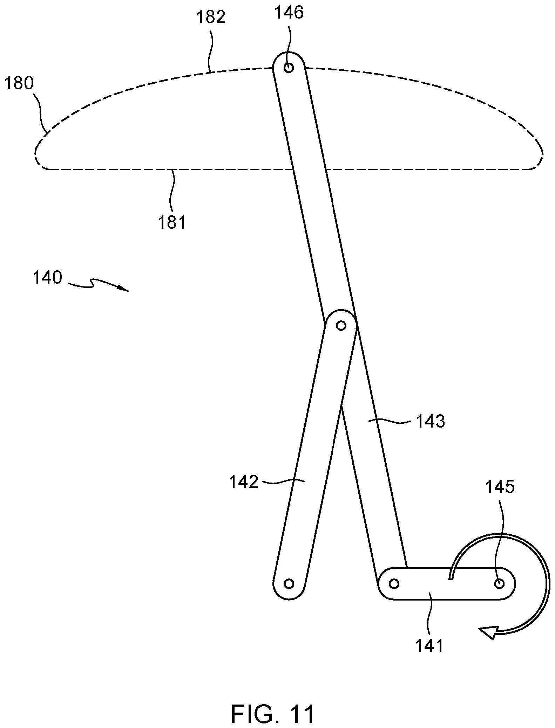

Figure 11 shows a schematic representation of an exemplary linkage mechanism 140 as a kinematic transformer module. The linkage mechanism 140 is configured for imposing a predefined cyclic trajectory on an output 146 of the linkage mechanism 140. The linkage mechanism 140 is in particular configured to impose a kidney-shaped trajectory on the output 146. The exemplary linkage mechanism 140 as shown in Figure 11 is a four-link mechanism, but it will be appreciated that otherwise configured linkage mechanism are also envisioned. The linkage mechanism 140 comprises a first link body 141, defining a first link, having an input 145 that is arranged to be rotationally driven, for instance by drive module 130 via the drive shaft 131. A second link body 142, defining a second link, is pivotally connected to the first link body 141, and comprise an output 146, for example for connecting to the wiper 121. The linkage mechanism 140 further comprises a third link body 143, defining a third link, that is pivotally connected to the second link body 142. A fourth link is defined between the input 146 and a free end of the third link body 143. The free end of the third link body 143, opposite the connection between the second and third links, can be arranged for pivotally connecting to the housing module 110. In the particular example of Figure 11, often referred to as a Chebyshev Lambda mechanism, the first link has a length A, the second link a length 5A, the third link length 2.5A, and the fourth link 2A. The second link body 142 and the third link body 143 connect at a distance from the output 146 of 2.5A. A rotation of the first link body 141 about the input, e.g. as indicated by the arrow in Figure 11, imposes a closed endless trajectory 180 of the output as indicated by the dashed line in Figure 11. When connected to the wiper 121, the trajectory is referred to the wiper trajectory 180 as described herein. The wiper trajectory 180 comprises a wiping section 181 and a non-wiping section 182. In this example, the wiping trajectory 180 is rectilinear but it will be appreciated that the linkage mechanism 140 can be adapted to impose a curved wiping section 141, e.g. by changing the relative dimensions of the links. The wiping section 181 is preferably substantially parallel to, or may coincide with, the sensor window plane 113. The non-wiping section 182 is curved.

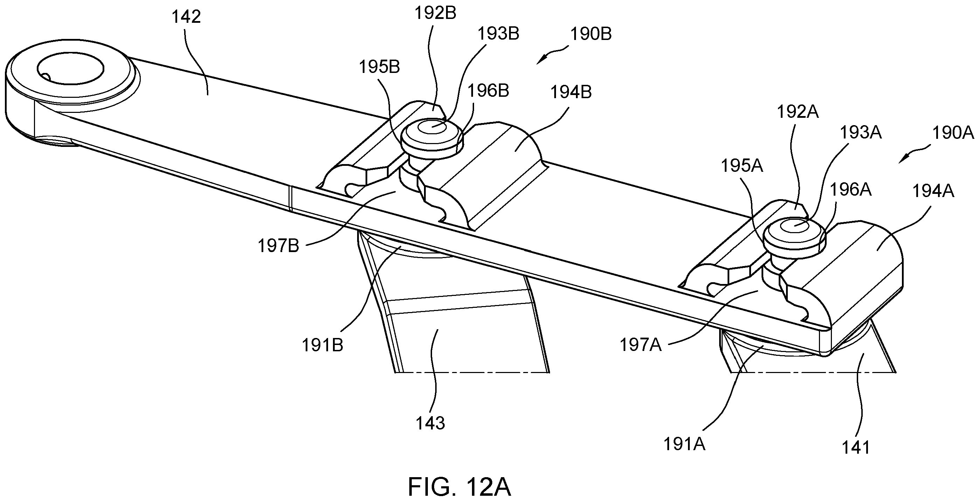

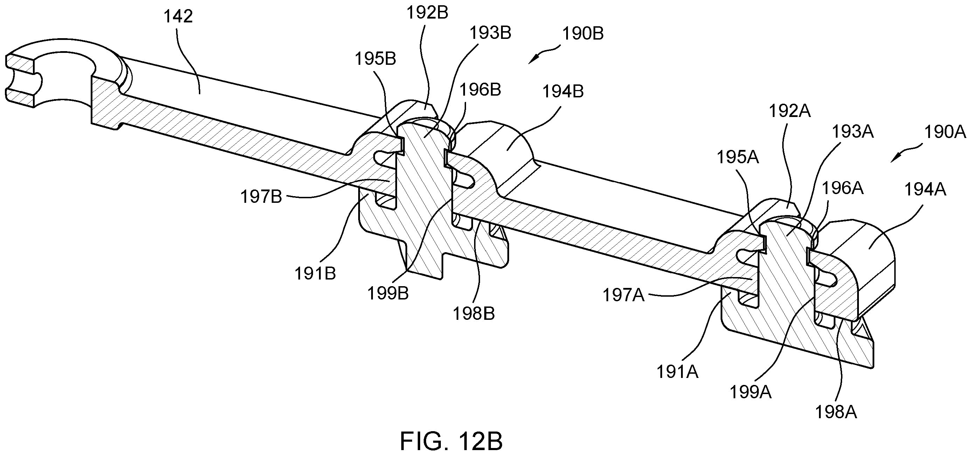

Figures 12A and 12B show a detailed view of a snap connection, in this case a first snap connection 190A between the second link body 142 and the first link body 141 and a second snap connection 190B between the second link body 142 and the third link body 143. Figure 12B shows a cross sectional view of the snap connection shown in Figure 12A. A snap connection is a particularly easy and fast assembly action. Here, the first link body 141 comprises, integrally formed therewith, a male connector organ 193A, which extends in axial direction outward from the first link body 141 to an open end. Similarly, the third link body 141 comprises, integrally formed therewith, a male connector organ 193B, which extends in axial direction outward from the third link body 143 to an open end. At or near the open end, the male connector organ 193A, 193B, comprises a circumferential edge 195A, 195B, here formed by an indentation which extends circumferentially around the male connector organ 193A, 193B.

The male connector organ 193A, 193B is inserted into a female connector organ 197A, 197B, here a through respective holes through the second link body 142. A radial bearing interface 199A, 199B is formed where the male connector organ 193A, 193B and the female connector organ 197A, 197B make contact, wherein radial bearing interface 199A, 199B allows for a rotation of the male connector organ 193A, 193B relative to the female connector organ 197A, 197B. The male connector organ 193A, 193B, is furthermore axially blocked by means of a blocking organ, here embodied as flaps 192A, 194A, 192B, 194B which flaps 192A, 194A, 192B, 194B are integrally formed with the second link body 142. The flaps 192A, 194A, 192B, 194B interact with the circumferential edge 195A, 195B to prohibit an axial movement of the male connector organ 193A, 193B. Where the flaps 192A, 194A, 192B, 194B and the circumferential edge 195A, 195B interact, there is defined an axial blocking interface 196A, 196B.

The radial bearing interface 199A, 199B and the axial blocking interface 196A, 196B are separated from each other, particularly in axial direction, to obtain a robust and sturdy connection that allows for low friction relative rotation of the link bodies.

The snap connection 190A, 190B also comprises a ridge 191A, 191B, which extends circumferentially around the male connector organ 193A, 193B. The ridge 191A, 191B is here integrally formed with the first link body 141 and the third link body 143 respectively, but it is clear that the ridge 191A, 191B may also be formed integrally with the second link body 142. The ridge 191A, 191B spaces the second link body 142 apart from the first link body 141 and the third link body 143 so as to facilitate a relative rotation of the link bodies 141, 142, 143. The ridge 191A, 191B comprises a bearing surface 198A 198B for facilitating the relative rotation.

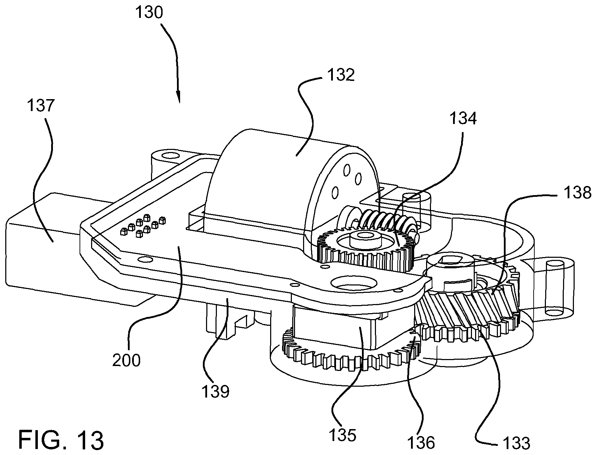

Figure 13 shows a schematic view of the drive module 130. The drive module 130 comprises a housing 139, which housing 139 is particularly sealed against ingress of contaminants. The housing 139 can be particularly water-tight housing and/or dust-tight. The housing 139, here, contains a motor 132, here a DC motor, and a rotary output organ 133 that is coupled to the motor through a transmission 134, which includes several gears. Only half of the housing 139 is transparently depicted in Figure 13 to show the internal components contained by the housing 139.

Fixedly coupled to the rotary output organ 133 is provided a rotary position sensor 135 for sensing a rotary position of the rotary output organ 133. The rotary position sensor 135 is coupled to the rotary output organ through a fixed 1:1 transmission ratio, such that single full rotation of the rotary output organ 133 corresponds to a single full rotation of the rotary position sensor 135. The rotary position sensor 135 is here an endless potentiometer, but it will be appreciated that alternative types of rotary position sensors can be employed. For calibrating the rotary position sensor, and to facilitate assembly of the drive unit, a calibration notch or tooth 136 may be provided, to ensure a unique relative configuration between the rotary output organ 133 and the rotatory position sensor 135.

The drive module 130 further comprises a control unit 200, here formed by a printed circuit board. The control unit 200 is operatively connected to the rotary position sensor 135, and is arranged to control a movement of the rotary output organ 133 based on the rotary position of the rotary output organ 133, by activating the motor 132.

The drive module 130 further includes a clutch 138, particularly a friction clutch, arranged in the transmission 134, for allowing a decoupling of the motor from the rotary output organ 133.

The drive module 130 also comprises a communication port 137 for communicating with a vehicle communication network, such as LIN bus and/or CAN bus. The control unit 200 is arranged to control a motion of the rotary output organ 133 on the basis of information received from the vehicle communication network.

The control unit 200 contains one or more control programs, particularly relating to cleaning programs for cleaning the sensor window 11 of the LiDAR sensor 10.

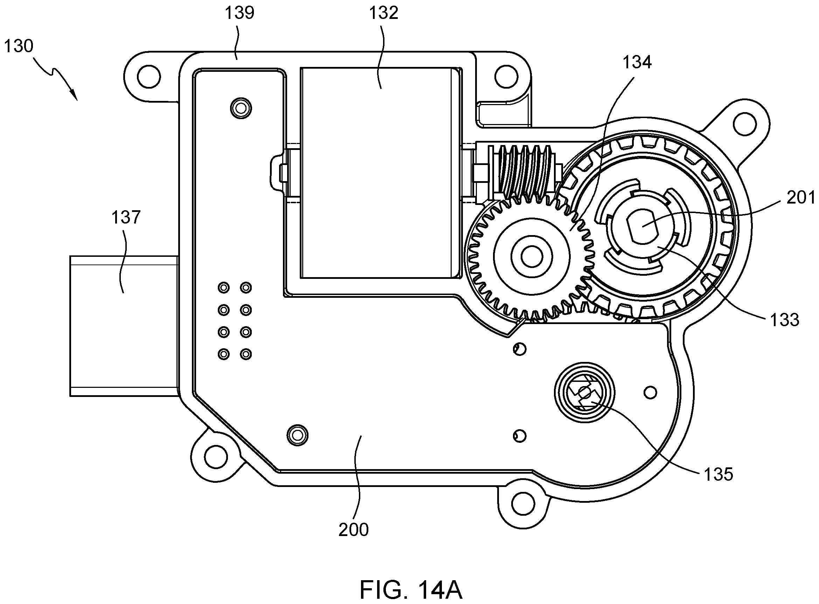

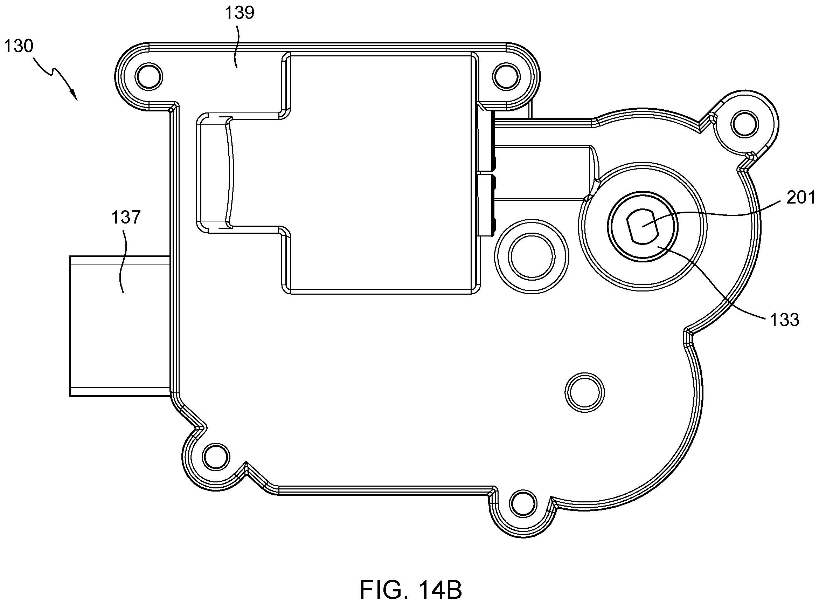

Figures 14A and 14B show a frontal view of the drive module 130. In Figure 14A, part of the housing 139 is omitted to show the interior of the drive module 130. It can be seen that the drive module 130 comprises a through hole 201 for receiving therethrough the drive shaft 131. The rotary output organ 133 rotationally couples with the drive shaft 131 by means of a form-fitted coupling. The drive shaft 131 when coupled to the rotary output organ 133 extends through the drive module 130 to protrude on either side of the housing 139. This way, a kinematic transformer module, e.g. a linkage mechanism 140, can be coupled to either end of the drive shaft 131.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to `only one', but instead are used to mean `at least one', and do not exclude a plurality. The mere fact that certain measures are recited in mutually different claims does not indicate that a combination of these measures cannot be used to an advantage.

The disclosure will now be further described by the following numbered Embodiments which are to be read in connection with the preceding paragraphs and which do not limit the disclosure. The features and preferences as described hereinabove apply also to the following Embodiments.

Embodiment 1. Cleaning system for cleaning a sensor window of an optical sensing device of a motor vehicle, the system comprising
a housing module for cooperating with the sensing device, comprising a window opening, that defines a sensor window plane, for receiving therein the sensor window of the optical sensing device;
a wiper module including a wiper for wiping the sensor window;
a drive module, having a rotary output organ,; and
a kinematic transformer module interconnected between the drive module and the wiper module and configured for transforming a rotation of the rotary output organ of the drive module so as to drive the wiper in a cyclic wiper trajectory.

Embodiment 2. System according to Embodiment 1, wherein the cyclic wiper trajectory comprises a wiping section in which the wiper is driven substantially in the sensor window plane so as to wipe the sensor window, and a non-wiping section in which the wiper is driven at a distance away from the sensor window plane without wiping the sensor window.

Embodiment 3. System according to Embodiment 1 or 2, wherein the system is arranged to move the wiper along a first section of the wiper trajectory having a directional component parallel to the sensor window plane, and wherein the system is arranged to move the wiper along a second section of the wiper trajectory having a directional component transverse to the sensor window plane.

Embodiment 4. System according to any preceding Embodiment, wherein the wiping section of the wiper trajectory is substantially rectilinear.

Embodiment 5. System according to any preceding Embodiment, wherein the kinematic transformer module comprises a linkage mechanism, having an input connected to the rotary output organ of the drive module and an output connected to the wiper module, for imposing a motion on the wiper along the wiper trajectory.

Embodiment 6. System according to Embodiment 2, wherein the wiper trajectory includes an initial point in which the wiper assumes an initial position at or near an edge of the window opening, and wherein the system is arranged to drive the wiper from the initial position, along the wiper trajectory, firstly through the non-wiping section and secondly through the wiping section.

Embodiment 7. System according to Embodiment 6, wherein, in the initial position, the wiper is positioned at or on a housing module part outside of the sensor window opening.

Embodiment 8. System according to any preceding Embodiment, comprising a moistening device arranged for selectively releasing a cleaning medium.

Embodiment 9. System according to Embodiment 8, wherein the moistening device comprises one or more nozzles which are movably arranged relative to the housing module, and wherein the system is arranged for moving the one or more nozzles over the sensor window so as to deposit the cleaning medium onto the sensor window.

Embodiment 10. System according to Embodiment 9, wherein the system is arranged to move the one or more nozzles parallel to the sensor window plane.

Embodiment 11. System according to any of Embodiments 8-10, wherein the one or more nozzles are oriented at an angle relative to the sensor window plane.

Embodiment 12. System according to any of Embodiments 8-11, wherein the one or more nozzles are arranged on the wiper module.

Embodiment 13. System according to any of Embodiments 8-12, wherein the system is arranged to release, in use with the moistening device, the cleaning medium when the wiper is driven along the non-wiping section of the wiper trajectory.

Embodiment 14. System according to any of Embodiments 8-13, wherein the system is arranged to release, in use with the moistening device, 2-20 mL of liquid cleaning medium in a single wiper trajectory cycle.

Embodiment 15. System according any preceding Embodiment, comprising a shielding cover for at least partly shielding the window opening, wherein the system is arranged to move the shielding cover relative to the housing module between a closed state in which the shielding cover at least partly covers the window opening, and an open state, in which the shielding has uncovered the window opening.

Embodiment 16. System according to Embodiment 15, wherein the shielding cover is slidably receivable in a cavity of the housing module, the system being arranged to move the shielding cover relative to the housing module between the closed state, in which the shielding cover extends substantially parallel to the sensor window plane so as to cover the sensor window, and the open state, in which the shielding cover is slidably received in the cavity and extends substantially transverse to the sensor window plane.

Embodiment 17. System according to Embodiment 16, wherein the shielding cover is hingedly coupled to the wiper module.

Embodiment 18. System according to any of Embodiments 15-17 when dependent on Embodiment 8, wherein the system is arranged to at least partly cover the sensor window, with the shielding cover when, in use, the cleaning medium is deposited onto the sensor window.

Embodiment 19. System according to any preceding Embodiment, the wiper module comprising a wiper frame, wherein the wiper frame includes a first guide member arranged for cooperating with the housing module for guiding a movement of the wiper frame in a direction substantially parallel to the sensor window plane, and a second guide member arranged for cooperating with the wiper for guiding a movement of the wiper relative to the wiper frame in a direction transverse to the sensor window plane.

Embodiment 20. System according to Embodiment 19, wherein the wiper is connected to an output of the kinematic transformer module, and comprises an entrainment surface for entraining the wiper frame along with a movement of the wiper.

Embodiment 21. System according to any preceding Embodiment wherein the wiper rotationally freely couples to an output of the kinematic transformer module.

Embodiment 22. System according to any of Embodiments 19-21, wherein the wiper frame is arranged to rotationally lock the wiper.

Embodiment 23. System according to any preceding Embodiment, the wiper comprising a wiper blade and a wiper blade holder for holding the wiper blade, wherein the wiper blade is spring-loadedly movable relative to the wiper blade holder in a direction transverse to the sensor window plane.

Embodiment 24. System according to Embodiment any of Embodiments 19-23, wherein the wiper is releasably coupled to the wiper frame.

Embodiment 25. System according to Embodiment 23 or 24, wherein the wiper blade is made of a resilient material.

Embodiment 26. System according to any preceding Embodiment, comprising a control unit arranged for controlling a rotary motion of the rotary output organ of the drive module.

Embodiment 27. System according to Embodiment 26, comprising a position sensor for sensing a position of the wiper in the wiper trajectory, wherein the control unit is operatively connected to the position sensor.

Embodiment 28. System according to Embodiment 26 or 27 when dependent on Embodiment 8, wherein the control unit is arranged for controlling the moistening device.

Embodiment 29. System according to Embodiment 28, wherein the control unit is programmed to include a control mode in which the cleaning medium is released, by the moistening device, while the wiper is in the non-wiping section of the wiper trajectory, and/or in which the moistening device refrains from releasing the cleaning medium while the wiper is in the wiping section of the wiper trajectory.

Embodiment 30. System according to Embodiment 29, wherein the control unit is programmed to include a control mode in which a motion of the wiper is intermitted for a predetermined soaking time, after release of the cleaning medium.

Embodiment 31. System according to any of Embodiments 28-30 when dependent on Embodiment 9, wherein the control unit is programmed to include a control mode in which the cleaning medium is released from the one or more nozzles of the moistening device, while the nozzles face a scraping unit of the cleaning system.

Embodiment 32. System according to any of Embodiments 28-31, wherein the control unit is programmed to include a control mode in which the moistening device refrains from releasing a cleaning medium during at least an entire cycle of the wiper trajectory.

Embodiment 33. System according to any of Embodiments 28-32, wherein the control unit is programmed to include a control mode in which the cleaning medium is released with the moistening device while the wiper is at the wiping section of the wiper trajectory, particular in case the sensor window is dry.

Embodiment 34. System according to any of Embodiments 28-33, wherein the control unit is programmed to include a control mode in which 2-20 mL of liquid cleaning medium is released with the moistening device per cycle of the wiper trajectory.

Embodiment 35. System according to any of Embodiments 28-34 when dependent on Embodiment 15, wherein the control unit is programmed to include a control mode in which the sensor window opening is at least partly covered by the shielding cover while the cleaning medium is released with the moistening device.

Embodiment 36. Rotatable snap connection between a first link body and a second link body, wherein the first link body comprises a male connector organ extending in an axial direction outward from the first link body, and a second link body comprises a female connector organ, and wherein the male connector organ is insertable into the female connector organ to snappingly connect the first link body and the second link body with each other, wherein, when connected, the female connector organ radially bears the male connector organ at a radial bearing interface between the male connector organ and the female connector organ such that the first link body and the second link body are pivotable relative to each other in a plane transverse to the axial direction, and the female connector organ blocks an axial movement of the male connector organ at a blocking interface between the male connector organ and the second connector member, wherein the blocking interface and the radial bearing interface are axially separated from one another.

Embodiment 37. Snap connection according to Embodiment 36, wherein the male connector organ is integrally formed therewith the first link body, and/or wherein the female connector organ is integrally formed with the second connector organ.

Embodiment 38. Snap connection according to Embodiment 36 or 37, wherein the female connector organ comprises a blocking organ for blocking the axial movement of the male connector organ, the blocking organ comprising a flap that cooperates with an indentation in the male connector organ.

Embodiment 39. Snap connection according to any of Embodiments 36-38, comprising, between the first and second link body, a spacer for spacing the first link body and the second link body apart, when connected.

Embodiment 40. Snap connection according to any of Embodiments 36-39, wherein the first link body and the second link body are injection moulded.

Embodiment 41. Kinematic transformer module, in particular for a cleaning system according to any of Embodiments 1-35, comprising a linkage mechanism configured for transforming a rotational motion of a rotary output organ of a drive module into a cyclic wiper trajectory of a wiper.

Embodiment 42. Kinematic transformer unit according to Embodiment 41, wherein the linkage mechanism includes a snap connection according to any of Embodiments 36-39.

Embodiment 43. Kinematic transformer module according to Embodiment 41 or 42 wherein the first link body has an input connector arranged for connecting to an rotary output organ of the drive module, and wherein first link body is rotatably arranged around a drive axis, the second link body comprising an output connector for connecting to the wiper, wherein the linkage mechanism is configured for transforming a rotational motion of the first link body around the drive axis to a cyclic wiper trajectory of the output connector of the second link body, the wiper trajectory including a rectilinear section.

Embodiment 44. Kinematic transformer module according to Embodiment 43, wherein the linkage mechanism further comprises a third link body, which third link body comprises a male or female connector organ for pivotably connecting to a complementary male or female connector organ of the second link body, and a housing connector for pivotally connecting to a housing module of the cleaning system.

Embodiment 45. Kinematic transformer module according to any of Embodiments 41-44, comprising a securing organ for axially securing the linkage mechanism to the housing module of the cleaning system.

Embodiment 46. Kinematic transformer module according to Embodiment 45, wherein the securing organ is integrally formed with any one or more of the first link body, the second link body and the third link body.

Embodiment 47. Drive module for driving an object along a cyclic trajectory, in particular for a modular cleaning system according to any of Embodiments 1-35, the drive module comprising a driver housing, the driver housing containing a motor, a rotary output organ connected to the motor through a transmission, and an endless rotary position sensor for determining an rotary position of the output organ, the endless rotary position sensor being connected to the rotary output organ in a fixed relation such that a one or more full rotations of the rotary output organ corresponds to one or more full rotations sensed by the rotary position sensor, and a control unit connected to the rotary position sensor and arranged for controlling a rotation of the rotary output organ.

Embodiment 48. Drive module according to Embodiment 47, comprising a fluid port for connection to a fluid conduit, and wherein the drive module comprises a valve for selectively opening and closing a fluid conduit.

Embodiment 49. Drive module according to Embodiment 48, comprising a fluid pump for pumping a fluid through the fluid conduit.

Embodiment 50. Drive module according to any of Embodiments 48 or 49, wherein the control unit is arranged for controlling a the pump and/or the valve for selectively supplying fluid to the fluid conduit.

Embodiment 51. Drive module according to any of Embodiments 48-50, wherein the housing module comprises a through hole for receiving a drive shaft therethrough.

Embodiment 52. Drive module according to any of Embodiments 48-51, wherein the transmission includes a clutch.

Embodiment 53. Drive module according to any of Embodiments 48-52, wherein the control unit comprises a communication port via which the control unit is configured to send and receive information to and from a vehicle communication network.

Embodiment 54. Drive module according to Embodiment 53, wherein the control unit contains one or more control programs, and wherein the control unit is arranged to execute any of said control programs based on information received from the vehicle communication network.

Embodiment 55. Drive module according to Embodiment 54, wherein the control unit contains a cleaning program in which the cleaning medium is released, by the moistening device, while the wiper is in the non-wiping section of the wiper trajectory, and/or in which the moistening device refrains from releasing the cleaning medium while the wiper is in the wiping section of the wiper trajectory.

Embodiment 56. Drive module according to Embodiment 55, wherein the cleaning program includes intermitting a motion of the wiper for a predetermined soaking time, after release of the cleaning medium.

Embodiment 57. Drive module according to Embodiment 55 or 56, wherein the cleaning program includes at least partly covering the sensor window opening while releasing the cleaning medium.

Embodiment 58. Drive module according to any of Embodiments 55-57, wherein the cleaning program includes cycling the wiper multiple consecutive times through the wiper trajectory.

Embodiment 59. Drive module according to any of Embodiments 55-58, wherein the cleaning program includes releasing 2-20 mL of liquid cleaning medium in a single cycle of the wiper trajectory.

Embodiment 60. Drive module according to any of Embodiments 55-59, wherein the control unit contains a start-up program in which the cleaning medium is released with the moistening device while the wiper is in the wiping section of the wiper trajectory, particular in case the sensor window is dry.

Embodiment 61. Drive module according to any of Embodiments 55-60, wherein the control unit contains a rain-program in which the moistening device refrains from releasing a cleaning medium during at least an entire cycle of the wiper trajectory.

Embodiment 62. Drive module according to any of Embodiments 55-61 , wherein the control unit contains a self-cleaning program in which the cleaning medium is released from the one or more nozzles of the moistening device, while the nozzles face a scraping unit of the cleaning system.

### LIST OF REFERENCE NUMBERS

100 cleaning system
10 lidar sensor
11 sensor window
110 housing module
111 sensor window opening
112 shaft opening
113 sensor window plane
114A, 114B guide members
116 cavity
117 abutment surface
118A, 118B guide members
119 coupling organ
120 wiper module
121 wiper
122 wiper frame
123 nozzles
124A, 124B first linear guide members
125 wiper blade
126 wiper blade holder
127 partition walls
128 second linear guide member
129 leaf spring
130 drive module
131 drive shaft
132 motor
133 rotary output organ
134 transmission
135 rotary position sensor
136 calibration notch
137 communication port
138 clutch
139 driver housing
140A, 140B linkage mechanisms
141 first link body
142 second link body
143 third link body
145 input of linkage mechanism
146 output of linkage mechanism
147A, 147B securing organs
150 shielding cover
160 protection frame
161 central opening
170 scraper unit
171 wiper blade scraper
172 nozzle scraper
180 wiper trajectory
181 wiping section
182 non-wiping section
190A, 190B snap connection
191A, 191B ridge
192A, 192B flaps
193A, 193B male connector organ
194A, 194B flaps
195A, 195B edge
196A, 196B axial blocking interface
197A, 197B female connector organ
198A, 198B bearing surface
199A, 199B radial bearing interface
200 control unit
201 through hole

## Claims

1. Cleaning system for cleaning a sensor window of an optical sensing device of a motor vehicle, the system comprising
a housing module for cooperating with the sensing device, comprising a window opening, that defines a sensor window plane, for receiving therein the sensor window of the optical sensing device;
a wiper module including a wiper for wiping the sensor window;
a drive module, having a rotary output organ;
a kinematic transformer module interconnected between the drive module and the wiper module and configured for transforming a rotation of the rotary output organ of the drive module so as to drive the wiper in a cyclic wiper trajectory;
a moistening device arranged for selectively releasing a cleaning medium; and
a control unit arranged for controlling a rotary motion of the rotary output organ, wherein the control unit is programmed to include a control mode in which the cleaning medium is released, by the moistening device, and wherein the control unit is programmed to include a control mode in which a motion of the wiper is intermitted for a predetermined soaking time, after release of the cleaning medium.

2. System according to claim 1, wherein the cyclic wiper trajectory comprises a wiping section in which the wiper is driven substantially in the sensor window plane so as to wipe the sensor window, and a non-wiping section in which the wiper is driven at a distance away from the sensor window plane without wiping the sensor window.

3. System according to claim 2, wherein the control unit is programmed to include a control mode in which the cleaning medium is released, by the moistening device, while the wiper is in the non-wiping section of the wiper trajectory, and/or in which the moistening device refrains from releasing the cleaning medium while the wiper is in the wiping section of the wiper trajectory.

4. System according to claim 2 or 3, wherein the wiper trajectory includes an initial point in which the wiper assumes an initial position at or near an edge of the window opening, and wherein the system is arranged to drive the wiper from the initial position, along the wiper trajectory, firstly through the non-wiping section and secondly through the wiping section.

5. System according to any of the preceding claims, wherein the moistening device comprises one or more nozzles which are movably arranged relative to the housing module, and wherein the system is arranged for moving the one or more nozzles over the sensor window so as to deposit the cleaning medium onto the sensor window.

6. System according to claim 5, wherein the system is arranged to move the one or more nozzles parallel to the sensor window plane.

7. System according to claim 5 or 6, wherein the one or more nozzles are oriented at an angle relative to the sensor window plane.

8. System according to any of claims 5-7, wherein the one or more nozzles are arranged on the wiper module.

9. System according to any of claims 5-8 , wherein the control unit is programmed to include a control mode in which the cleaning medium is released from the one or more nozzles of the moistening device, while the nozzles face a scraping unit of the cleaning system.

10. System according to any of the preceding claims, wherein the system is arranged to release, in use with the moistening device, 2-20 mL of liquid cleaning medium in a single wiper trajectory cycle.

11. System according any preceding claim, comprising a shielding cover for at least partly shielding the window opening, wherein the system is arranged to move the shielding cover relative to the housing module between a closed state in which the shielding cover at least partly covers the window opening, and an open state, in which the shielding has uncovered the window opening.

12. System according to claim 11, wherein the system is arranged to at least partly cover the sensor window, with the shielding cover when, in use, the cleaning medium is deposited onto the sensor window.

13. System according to claim 11 or 12, wherein the control unit is programmed to include a control mode in which the sensor window opening is at least partly covered by the shielding cover while the cleaning medium is released with the moistening device.

14. System according to any of the preceding claims, comprising a position sensor for sensing a position of the wiper in the wiper trajectory, wherein the control unit is operatively connected to the position sensor.

15. System according to any of the preceding claims, wherein the control unit is programmed to include a control mode in which the moistening device refrains from releasing a cleaning medium during at least an entire cycle of the wiper trajectory.
